# EUROPÄISCHE PATENTSCHRIFT

(11) **EP 1 233 322 B1**
(45) Veröffentlichungstag und Bekanntmachung des Hinweises auf die Patenterteilung: **12.12.2007**
(21) Anmeldenummer: 02003498.9
(22) Anmeldetag: 15.02.2002
(51) Int. Cl.: G05G 1/14, B60T 7/06

(54) **Pedal**
Pedal
Pédale

(30) Priorität: 20.02.2001 DE 10107899
(43) Veröffentlichungstag der Anmeldung: 21.08.2002
(73) Patentinhaber: Siemens VDO Automotive AG, 93055 Regensburg (DE)
(72) Erfinder: Beil, Egon, 61197 Florstadt (DE); Wehner, Andreas, 61389 Schmitten (DE)

(56) Entgegenhaltungen:
- DE-A- 19 504 971
- US-A- 6 019 016

## Beschreibung

Die Erfindung betrifft ein Pedal, insbesondere für ein Kraftfahrzeug, mit einem Pedalarm, welcher an seinem ersten Endbereich von einer Kraft, insbesondere einer Fußkraft, auslenkbar und an seinem zweiten Endbereich um eine Schwenkachse schwenkbar ist, wobei die Schwenkachse an einem ersten Hebelarm eines in einem Gehäuse angeordneten Hebels gelagert ist und die Schwenkbewegung des Pedalarms über einen zweiten Hebelarm des Hebels von einer Sensoreinheit erfaßbar ist, wobei der Pedalarm von einer Startstellung über eine Zwischenstellung in eine durch einen Endanschlag bestimmte Endstellung verschwenkbar ist.

Pedale der oben genannten Art siehe z.B. DE-A-195 04 971 werden heute vielfach als Fahrpedale bei Kraftfahrzeugen zur Steuerung der Geschwindigkeit eingesetzt. Hierbei lenkt beim Betrieb des Kraftfahrzeugs der Fahrer des Kraftfahrzeugs den Pedalarm des Pedals mittels Fußkraft aus, um eine bestimmte Geschwindigkeit des Kraftfahrzeugs zu erreichen. Die Auslenkung des Pedalarms ist dabei üblicherweise an eine Steuereinheit gekoppelt, über die die Geschwindigkeit des Kraftfahrzeugs einstellbar ist. Allgemein gilt: Je größer die Auslenkung des Pedalarms, desto größer die Geschwindigkeit des Kraftfahrzeugs.

Zur Steuerung der Geschwindigkeit des Kraftfahrzeugs ist das Pedal üblicherweise mechanisch oder elektronisch an eine Drosselklappe oder eine Diesel-Einspritzpumpe gekoppelt, über die die dem Vergaser zuzuführende Frischgasmenge bzw. Dieselmenge einstellbar ist. Bei einer mechanischen Kopplung zwischen dem Fahrpedal und der Drosselklappe bzw. der Diesel-Einspritzpumpe weist das mechanische System mit mehreren bewegten Elementen Reibung auf. Dadurch wird es dem Fahrer des Kraftfahrzeugs erleichtert, die Pedalstellung bei Relativbeschleunigungen zwischen dem Kraftfahrzeug und dem Fuß annähernd konstant zu halten, dies gilt insbesondere bei Ruck- und Stoßbewegungen, die auf Schlechtwegstrecken auftreten können. Durch die Reibung der mechanischen Elemente wird die Muskulatur des Fahrers des Kraftfahrzeugs bei längeren Fahrten mit annähernd konstanter Pedalstellung entlastet.

Bei einer elektronischen Kopplung zwischen dem Fahrpedal und der Drosselklappe bzw. der Diesel-Einspritzpumpe ist über einen in dem Fahrpedal integrierten Sollwertgeber der Drosselklappe eine bestimmte Position vorgebbar bzw. der Diesel-Einspritzpumpe eine bestimmte Dieselmenge zuweisbar. Aufgrund der fehlenden mechanischen Anbindung entfällt jedoch die bisher bei den mechanischen Systemen vorhandene mechanische Hysterese. Um nun auch bei einer elektronischen Kopplung zwischen dem Fahrpedal und dem Drosselklappenstutzen dem Fahrer das Gefühl einer Hysterese zu vermitteln, ist üblicherweise zur Erzeugung einer für den Fahrer des Kraftfahrzeugs spürbaren mechanischen Hysterese eine Reibungseinheit in das Pedal integriert.

Die Verschwenkbarkeit des Pedalarms des Pedals ist üblicherweise durch einen ersten Anschlag und einen zweiten Anschlag begrenzt. Der erste Anschlag legt dabei die Ausgangsposition des Pedalarms und der zweite Anschlag die Endstellung des Pedalarms fest. Diese beiden Anschläge können an einem Gehäuse angeordnet sein, das beispielsweise auch zur Lagerung der Schwenkachse vorgesehen ist. Die beiden Anschläge können aber auch außerhalb des Pedals angeordnet sein. Weiterhin gibt es Pedale, bei denen der erste Anschlag, insbesondere der Startanschlag, mit einem beispielsweise die Schwenkachse des Pedalarms umschließenden Gehäuse gekoppelt ist und der zweite Anschlag, insbesondere der Endanschlag, außerhalb des Pedals angeordnet ist. Befindet sich der Endanschlag außerhalb des Pedals, so ist bei der Justage des Pedals der Pedalarm relativ zu dem Endanschlag zu justieren. Diese Justagearbeiten gestalten sich insbesondere dann als schwierig, wenn zur Erfassung der Bewegung des Pedalarms des Pedals eine Sensoreinheit vorgesehen ist, über die die Bewegung des Pedalarms elektronisch erfaßbar ist. Bei einer derartigen Anordnung ist es einerseits erforderlich, den Bewegungsbereich des Pedalarms zuverlässig an die Sensoreinheit zu koppeln und andererseits den Pedalarm relativ zu einem externen Endanschlag zu justieren.

Der Erfindung liegt daher die Aufgabe zugrunde, ein Pedal der oben genannten Art anzugeben, bei dem der Bewegungsbereich des Pedalarms besonders einfach an eine elektronische Sensoreinheit zu koppeln ist und dessen Pedalarm in besonders einfacher Weise relativ zu einem externen Endanschlag justierbar ist.

Diese Aufgabe wird erfindungsgemäß dadurch gelöst, daß die Verschwenkung des Pedalarms von der Startstellung bis zu der Zwischenstellung mit einer Verschwenkung des Hebels gekoppelt und von der Sensoreinheit erfaßbar ist, wobei die Startstellung des Pedalarms als Anfangsposition und die Zwischenstellung des Pedalarms als Endposition für die Sensoreinheit erfaßbar sind, und daß die Verschwenkung des Pedalarms von der Zwischenstellung bis zu der Endstellung von einer Verschwenkung des Hebels entkoppelt ist.

Die Erfindung geht dabei von der Überlegung aus, daß ein Pedal, dessen Pedalarm besonders einfach an eine Sensoreinheit koppelbar und dessen Pedalarm weiterhin besonders einfach relativ zu einem externen Endanschlag justierbar ist, möglichst weitreichend vormontierbar sein sollte, um den Montageaufwand für das Pedal besonders gering zu halten. Daher sollte der Erfassungsbereich der Sensoreinheit relativ zu dem Pedalarm in einem vorgegebenen Bewegungsbereich einstellbar sein. Zur Vermeidung aufwendiger Justierarbeiten könnte dann der Pedalarm einen Bewegungsbereich aufweisen, bei dem der Pedalarm lediglich zu dem Endanschlag hin bewegt wird, jedoch die Sensoreinheit nicht mehr aktiv die Bewegung des Pedalarms erfaßt. Hierzu ist die Verschwenkung des Pedalarms von der Startstellung bis zur Zwischenstellung mit dem Hebel gekoppelt und von der Sensoreineit erfaßbar und die Bewegung des Pedalarms ab der Zwischenstellung bis zur Endstellung von dem Hebel entkoppelt.

Vorteilhafterweise ist der Verschwenkungsbereich des Hebels von einem ersten Anschlag, insbesondere einem Leerlaufanschlag, und einem zweiten Anschlag, insbesondere einem Vollastanschlag, begrenzt. Hierdurch ist der Bewegungsbereich des Hebels festgelegt, wodurch die Sensoreinheit besonders einfach relativ zu dem Bewegungsbereich des Hebels justierbar ist.

Vorteilhafterweise ist der Pedalarm in dem Bewegungsbereich zwischen der Startstellung und der Zwischenstellung über ein an dem Gehäuse abgestütztes erstes Rückstellfederelement mit dem ersten Hebelarm des Hebels gekoppelt. Hierdurch ist einerseits die Bewegung des Pedalarms mit dem Hebel koppelbar und andererseits eine spürbare mechanische Hysterese für die Betätigungskraft des Pedalarms erzeugbar. Außerdem gewährleistet das Rückstellfederelement besonders zuverlässig, daß der Pedalarm nach einer Auslenkung wieder in seine Startstellung überführt wird.

Vorteilhafterweise ist der Pedalarm in dem Bewegungsbereich zwischen der Zwischenstellung und der Endstellung von einem an einem Pedalarmanschlag abgestützten zweiten Rückstellfederelement zurückschwenkbar beaufschlagt, wobei der Pedalarmanschlag drehfest mit dem ersten Hebelarm des Hebels verbunden ist. Das an dem Pedalarmanschlag abgestützte Rückstellfederelement ermöglicht eine Bewegung des Pedalarms unabhängig von einer Bewegung des Hebels, da der Bewegungsbereich des Hebels lediglich den Bereich von der Startstellung bis zur Zwischenstellung des Pedalarms umfaßt.

Die mit der Erfindung erzielten Vorteile bestehen insbesondere darin, daß durch die Ankopplung der Bewegung des Pedalarms des Pedals an die Sensoreinheit in einem durch den Hebel vorgegebenen Bewegungsbereich aufwendige Justagearbeiten für das Pedal verzichtbar sind. Dabei weist das Pedal gleichzeitig einen besonders geringen Herstellungsaufwand und Wartungsaufwand auf. Der externe Endanschlag kann dabei besonders starke Kräfte abfangen, die auf den Pedalarm des Pedals ausgeübt werden.

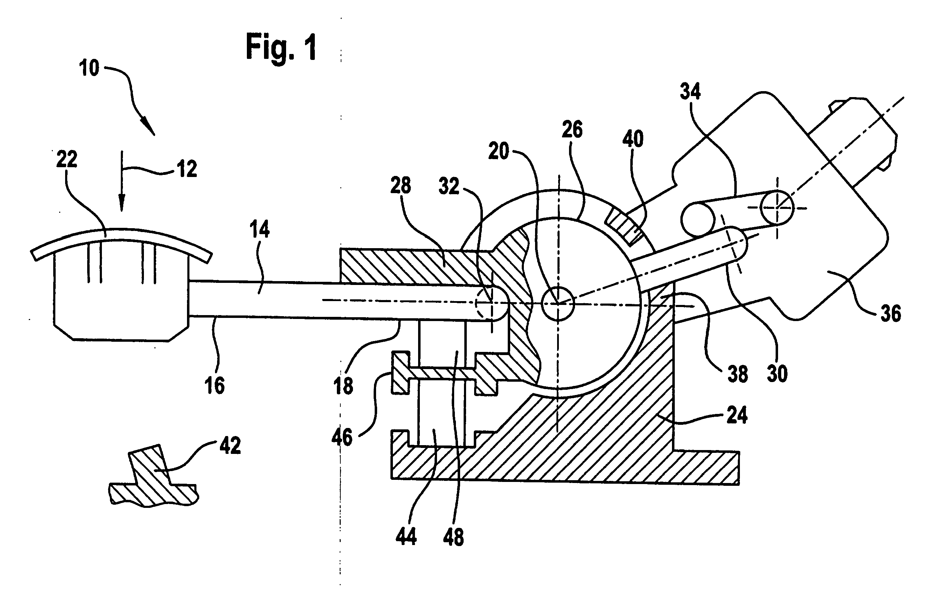

Ein Ausführungsbeispiel der Erfindung wird anhand einer Zeichnung näher erläutert. Darin zeigen die Figuren:
- Fig.: 1: schematisch ein Pedal in einer Startstellung,
- Fig.: 2: schematisch das Pedal gemäß Fig. 1 in einer Zwischenstellung und
- Fig.: 3: schematisch das Pedal gemäß den Fig. 1 u. 2 in einer Endstellung.

Das Pedal 10 gemäß Figur 1 ist als Fahrpedal eines Kraftfahrzeugs ausgebildet und durch eine Kraft 12, insbesondere eine Fußkraft, eines Fahrers zu betätigen. Mit der Betätigung des Pedals 10 steuert der Fahrer die Geschwindigkeit des Kraftfahrzeugs. Der Fahrer und das Kraftfahrzeug sind in der Zeichnung nicht näher dargestellt.

Das Pedal 10 umfaßt einen Pedalarm 14 mit einem ersten Endbereich 16 und einem zweiten Endbereich 18. Der erste Endbereich 16 des Pedalarms 14 ist um eine erste Schwenkachse 20 schwenkbar, an der der Pedalarm 14 mittelbar angeordnet ist. Der erste Endbereich 16 des Pedalarms 14 weist eine Pedalplatte 22 auf, die von der Kraft 12 des nicht näher dargestellten Fahrers des ebenfalls nicht näher dargestellten Kraftfahrzeugs betätigbar ist.

Der zweite Endbereich 18 des Pedalarms 14 ist über einen in einem Gehäuse 24 gelagerten zweiarmigen Hebel 26 an der ersten Schwenkachse 20 angeordnet, die gleichzeitig die Schwenkachse 20 des zweiarmigen Hebels 26 ist. In diesem Ausführungsbeispiel ist der zweite Endbereich 18 des Pedalarms 14 schwenkbar über eine zweite Schwenkachse 32 an einem ersten Hebelarm 28 des zweiarmigen Hebels 26 angeordnet. Ein zweiter Hebelarm 30 des zweiarmigen Hebels 26 beaufschlagt ein Hebelelement 34, das einer Sensoreinheit 36 zugeordnet ist. Der Bewegungsbereich des zweiten Hebelarms 30 des Hebels 26 ist durch einen Leerlaufanschlag 38 und einen Vollastanschlag 40 begrenzt. Die Begrenzung des Bewegungsbereichs des zweiten Hebelarms 30 des zweiarmigen Hebels 26 gilt auch für den ersten Hebelarm 28 des zweiarmigen Hebels 26, da der erste Hebelarm 28 drehfest mit dem zweiten Hebelarm 30 verbunden ist. Da der erste Hebelarm 28 des zweiarmigen Hebels 26 starr mit dem zweiten Hebelarm 30 des zweiarmigen Hebels 26 verbunden ist und der Bewegungsbereich des zweiten Hebelarms 30 des zweiarmigen Hebels 26 durch einen Leerlaufanschlag 38 begrenzt ist, begrenzt der Leerlaufanschlag 38 gleichzeitig auch die Startstellung des Pedalarms 14. Die Endstellung des Pedalarms 14 wird durch einen externen Endanschlag 42 begrenzt.

Der Pedalarm 14 ist über den ersten Hebelarm 28 des zweiarmigen Hebels 26 von einem ersten Rückstellfederelement 44 in seine Startstellung zurückschwenkbar beaufschlagt. Das erste Rückstellfederelement 44 ist dabei einerseits an dem Gehäuse 24 und andererseits an einem Pedalarmanschlag 46 abgestützt, der drehfest mit dem ersten Hebelarm 28 des zweiarmigen Hebels 26 verbunden ist. Das erste Rückstellfederelement 44 dient gleichzeitig zur Erzeugung einer mechanischen Hysterese für das Pedal 10. Dies wird dadurch erreicht, daß das erste Rückstellfederelement 44 beim Hinunterdrücken des Pedalarms 14 durch die externe Kraft 12 der externen Kraft 12 eine mit zunehmendem Hinunterdrücken des Pedalarms 14 ansteigende Widerstandskraft entgegensetzt.

Weiterhin ist der erste Hebelarm 28 des zweiarmigen Hebels 26 unmittelbar gegen den Pedalarm 14 beaufschlagt. Hierzu ist ein zweites Rückstellfederelement 48 einerseits an dem Pedalarmanschlag 46 und andererseits an dem Pedalarm 14 abgestützt, wobei das zweite Rückstellfederelement 48 den Pedalarm 14 gegen den ersten Hebelarm 28 des zweiarmigen Hebels 26 beaufschlagt.

Das erste Rückstellfederelement 44 und das zweite Rückstellfederelement 48 sind in der Zeichnung nur schematisch dargestellt. Das zweite Rückstellfederelement 48 ist so ausgelegt, daß im Gegensatz zum ersten Rückstellfederelement 44 eine größere Kraft erforderlich ist, um das zweite Rückstellfederelement 48 hinunterzudrücken.

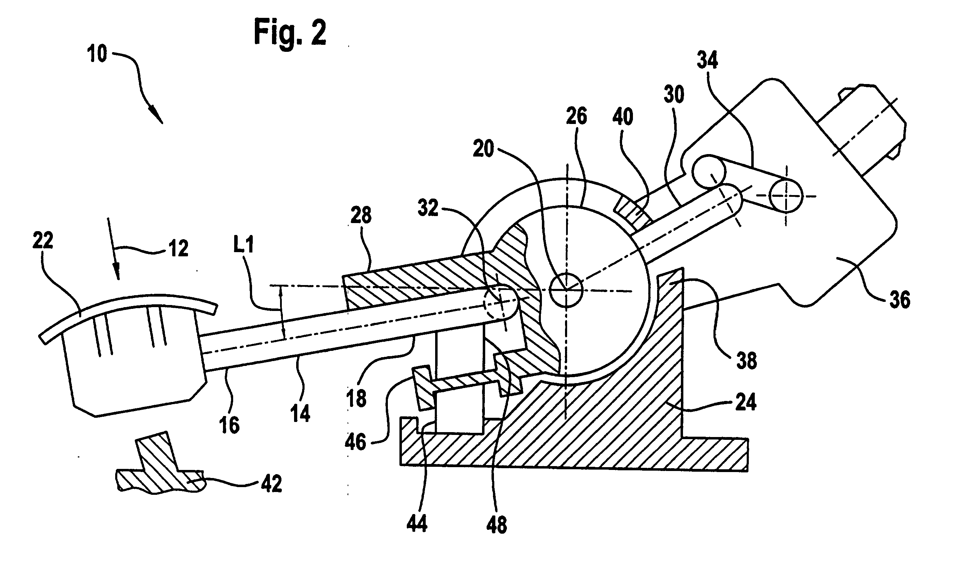

Beim Betrieb des Pedals 10 wird der Pedalarm 14 durch die externe Kraft 12 gegen den Uhrzeigersinn, also gemäß Figur 1 nach unten, verschwenkt. Figur 1 zeigt dabei den Pedalarm 14 des Pedals 10 in seiner Startstellung. In Figur 2 ist der Pedalarm 14 in seiner Zwischenstellung dargestellt. In der Zwischenstellung ist der Pedalarm 14 um einen Winkel L1 gegenüber der Startstellung ausgelenkt. In dieser Zwischenstellung liegt der erste Hebelarm 28 des zweiarmigen Hebels 26 an dem Pedalarm 14 an. Der zweite Hebelarm 30 des zweiarmigen Hebels 26 berührt in der Zwischenstellung des Pedalarms 14 den Volllastanschlag 40. Das erste Rückstellfederelement 44 ist in dieser Position des Pedalarms 14 zusammengedrückt. Das zweite Rückstellfederelement 48 hingegen ist nur ansatzweise oder noch gar nicht zusammengedrückt. Mit anderen Worten: Das zweite Rückstellfederelement 48 ist so ausgelegt, daß es in dem Bewegungsbereich des Pedalarms 14 von der Startstellung bis zur Zwischenstellung annähernd unverändert in seiner Form bleibt.

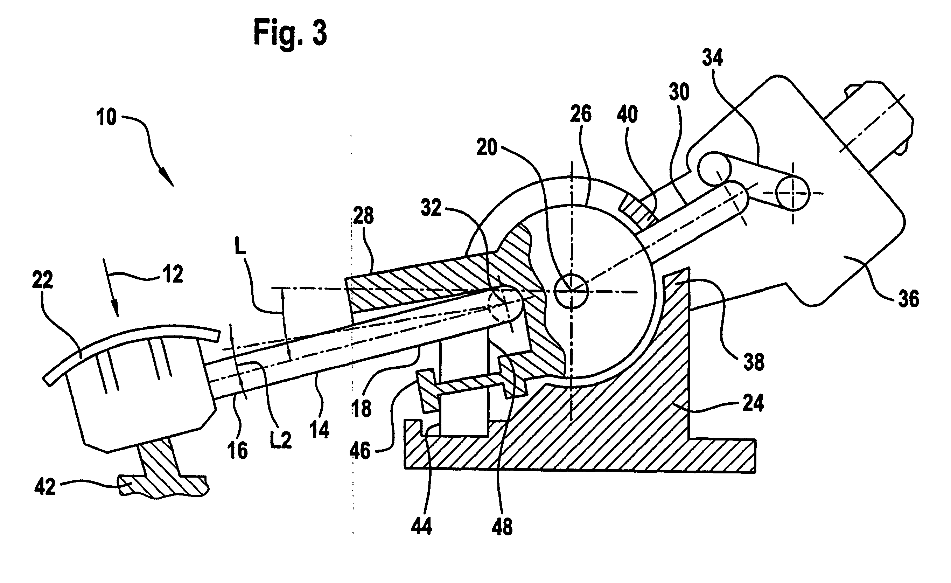

Bewegt nun die externe Kraft 12 den Pedalarm 14 weiter gegen den Uhrzeigersinn, so erreicht der Pedalarm 14 schließlich die Endstellung, die in Figur 3 dargestellt ist. Der Pedalarm 14 ist nun um einen Winkel L2 gegenüber seiner Zwischenstellung und insgesamt um einen Winkel L ausgelenkt. Die Pedalplatte 22 berührt mit ihrer Unterseite den externen Endanschlag 42.

Der zweite Hebelarm 30 des zweiarmigen Hebels 26 liegt während der Bewegung des Pedalarms 14 von der Zwischenstellung in die Endstellung an dem Volllastanschlag 40 an. Hierdurch folgt der fest mit dem zweiten Hebelarm 30 des zweiarmigen Hebels 26 gekoppelte erste Hebelarm 28 des zweiarmigen Hebels 26 nicht der Bewegung der Pedalarms 14. Der erste Hebelarm 28 des zweiarmigen Hebels 26 ist in der Position der Zwischenstellung des Pedalarms 14 durch den Vollastanschlag 40 festgehalten. Trotz der Festsetzung des Hebels 26 durch den Volllastanschlag 40 bewegt sich der Pedalarm 14 bei Einwirkung der externen Kraft 12 auf die Pedalplatte 22 weiter gegen den Uhrzeigersinn, da der Pedalarm 14 über die zweite Schwenkachse 32 an dem ersten Hebelarm 28 des Hebels 26 angeordnet ist. Bei der Bewegung des Pedalarms 14 mittels der zweiten Schwenkachse 32 wird das zweite Rückstellfederelement 48 gegen den Pedalarmanschlag 46 gedrückt. Dabei setzt das zweite Rückstellfederelement 48 mit zunehmendem Hinunterdrücken des Pedalarms 14 der externen Kraft 12, die auf die Pedalplatte 22 wirkt, eine steigende Widerstandskraft entgegen. Hierdurch wird auch in dem Bewegungsbereich des Pedalarms zwischen der Zwischenstellung und der Endstellung eine mechanische Hysterese erzeugt.

Bei einer Bewegung des Pedalarms 14 von der Zwischenstellung zur Endstellung befindet sich der zweite Hebelarm 30 des zweiarmigen Hebels 26 in einer durch den Volllastanschlag 40 definierten festen Positon. Daher erfaßt die Sensoreinheit 36 nicht die Bewegung des Pedalarms 14 von der Zwischenstellung bis zur Endstellung des Pedalarms 14. Der von der Sensoreinheit 36 erfaßbare Bereich der Bewegung des Pedalarms 14 ist also auf den Bereich von der Startposition des Pedalarms 14 bis zur Zwischenposition des Pedalarms 14 festgelegt. Hierdurch ist die Sensoreinheit 36 schon vor dem Einbau des Pedals 10 in beispielsweise ein Kraftfahrzeug relativ zu dem Bewegungsbereich des Pedalarms 14 des Pedals 10 justierbar. Die Sensoreinheit 36 ist dabei mittels des Leerlaufanschlags 38 und des Volllastanschlags 40 relativ zu dem Bewegungsbereich des Pedalarms 14 einstellbar. Hierdurch ist das Pedal 10 fast vollstandig vormontierbar.

Der Pedalarm 14 ist über den von der Sensoreinheit 36 erfaßbaren Bereich hinaus von der Zwischenstellung in die Endstellung bewegbar. Hierdurch ist zuverlässig gewährleistet, dass der Pedalarm 14 auch besonders starke externe Kräfte 12 abfangen kann. Hätte das Pedal 10 keinen externen Endanschlag 42, so müßte das Gehäuse 24 die auf den Pedalarm 14 wirkenden Kräfte vollständig abfangen. Dies würde eine besonders hohe Stabilität des Gehäuses 24 voraussetzen. Die Entkopplung des Erfassungsbereichs der Sensoreinheit 36 und des vollständigen Bewegungsbereichs des Pedalarms 14 des Pedals 10 vermeidet dabei besonders zuverlässig einen Signalüberhub in der Sensoreinheit 36. Weiterhin ist das Pedal 10 fast vollständig vomontierbar, wobei die Sensoreinheit 36 schon werksseitig relativ zu dem Bewegungsbereich des Pedalarms 14 vorjustierbar ist.

## Patentansprüche

1. Pedal (10), insbesondere für ein Kraftfahrzeug, mit einem Pedalarm (14), welcher an seinem ersten Endbereich (16) von einer Kraft (12), insbesondere einer Fußkraft, auslenkbar und an seinem zweiten Endbereich (18) um eine Schwenkachse (20) schwenkbar ist, wobei die Schwenkachse (20) an einem ersten Hebelarm (28) eines in einem Gehäuse (24) angeordneten Hebels (26) gelagert ist und die Schwenkbewegung des Pedalarms (14) über einen zweiten Hebelarm (30) des Hebels (26) von einer Sensoreinheit (36) erfaßbar ist, wobei der Pedalarm (14) von einer Startstellung über eine Zwischenstellung in eine durch einen Endanschlag (42) bestimmte Endstellung verschwenkbar ist, **dadurch gekennzeichnet, daß** die Verschwenkung des Pedalarms (14) von der Startstellung bis zu der Zwischenstellung mit einer Verschwenkung des Hebels (26) gekoppelt und von der Sensoreinheit (36) erfaßbar ist, wobei die Startstellung des Pedalarms (14) als Anfangsposition und die Zwischenstellung des Pedalarms (14) als Endposition für die Sensoreinheit (36) erfaßbar ist, und daß die Verschwenkung des Pedalarms (14) von der Zwischenstellung bis zu der Endstellung von einer Verschwenkung des Hebels (26) entkoppelt ist.

2. Pedal (10) nach Anspruch 1, **dadurch gekennzeichnet, daß** der Verschwenkungsbereich des Hebels (26) von einem Leerlaufanschlag (38), und einem Vollastanschlag (40), begrenzt ist.

3. Pedal (10) nach Anspruch 1 oder 2 **dadurch gekennzeichnet, daß** der Pedalarm (14) in dem Bewegungsbereich zwischen der Startstellung und der Zwischenstellung über ein an dem Gehäuse (24) abgestütztes erstes Rückstellfederelement (44) mit dem ersten Hebelarm (28) des Hebels (26) gekoppelt ist.

4. Pedal (10) nach einem der Ansprüche 1 bis 3 **dadurch gekennzeichnet, daß** der Pedalarm (14) in dem Bewegungsbereich zwischen der Zwischenstellung und der Endstellung von einem an einem Pedalarmanschlag (46) abgestützten zweiten Rückstellfederelement (48) zurückschwenkbar beaufschlagt ist, wobei der Pedalarmanschlag (46) drehfest mit dem ersten Hebelarm (28) des Hebels (26) verbunden ist.

## Claims

1. Pedal (10), in particular for a motor vehicle, with a pedal arm (14), which may be deflected by a force (12), in particular a foot force, at its first end region (16) and which may be pivoted at its second end region (18) about a pivot shaft (20), the pivot shaft (20) being mounted on a first lever arm (28) of a lever (26) arranged in a housing (24) and the pivoting motion of the pedal arm (14) being able to be detected via a second lever arm (30) of the lever (26) by a sensor unit (36), the pedal arm (14) being able to be pivoted from an initial position via an intermediate position into an end position determined by an end stop (42), **characterized in that** the pivoting of the pedal arm (14) from the initial position as far as the intermediate position is coupled to a pivoting of the lever (26) and may be detected by the sensor unit (36), the initial position of the pedal arm (14) being able to be detected as a start position and the intermediate position of the pedal arm (14) as an end position for the sensor unit (36) and **in that** the pivoting of the pedal arm (14) from the intermediate position as far as the end position is uncoupled from a pivoting of the lever (26).

2. Pedal (10) according to Claim 1, **characterized in that** the pivoting range of the lever (26) is defined by an idling stop (38) and a full load stop (40).

3. Pedal (10) according to Claim 1 or 2, **characterized in that**, in the range of motion between the initial position and the intermediate position, the pedal arm (14) is coupled to the first lever arm (28) of the lever (26) via a first restoring spring element (44) supported on the housing (24).

4. Pedal (10) according to one of Claims 1 to 3, **characterized in that**, in the range of motion between the intermediate position and the end position, the pedal arm (14) is acted upon in such a manner that it may be pivoted back by a second restoring spring element (48) supported on a pedal arm stop (46), the pedal arm stop (46) being connected fixedly in terms of rotation to the first lever arm (28) of the lever (26).

## Revendications

1. Pédale (10), notamment pour véhicule automobile, comportant un bras de pédale (14) qu'une force (12), notamment d'une force exercée par un pied, peut faire dévier à sa première extrémité (16) et qui peut, à sa deuxième extrémité (18), pivoter autour d'un axe de pivotement (20), où l'axe de pivotement (20) est monté sur un premier bras (28) d'un levier (26) placé dans un boîtier (24) et où le mouvement de pivotement du bras de pédale (14) peut être détecté par un ensemble capteur (36) par l'intermédiaire d'un deuxième bras (30) du levier (26), le bras de pédale (14) pouvant pivoter en partant d'une position de départ, en passant par une position intermédiaire, vers une position de fin de course déterminée par une butée (42) de fin de course, **caractérisé par le fait que** le pivotement du bras de pédale (14) entre la position de départ et la position intermédiaire est couplé à un pivotement du levier (26) et peut être détecté par l'ensemble capteur (36), la position de départ du bras de pédale (14) étant détectée pour l'ensemble capteur (36) comme position initiale et la position intermédiaire du bras de pédale (14), comme position finale et que le pivotement du bras de pédale (14) est découplé du pivotement du levier (26) entre la position intermédiaire et la position de fin de course.

2. Pédale (10) selon la revendication 1, **caractérisé par le fait que** la plage de pivotement du levier (26) est limitée par une butée (38) de marche au ralenti et par une butée (40) de marche à pleins gaz.

3. Pédale (10) selon la revendication 1 ou 2, **caractérisé par le fait que** le bras de pédale (14) est couplé, par l'intermédiaire d'un premier élément (44) à ressort de rappel qui s'appuie sur le boîtier (24), au premier bras (28) du levier (26) dans la plage de pivotement entre la position de départ et la position intermédiaire.

4. Pédale (10) selon l'une des revendications 1 à 3, **caractérisé par le fait que** le bras de pédale (14) est, dans la plage de pivotement entre la position intermédiaire et la position de fin de course, soumis, par un deuxième élément (48) à ressort de rappel appliqué sur une butée (46) du bras de pédale, à un pivotement de retour, la butée (46) du bras de pédale étant fixée en blocage de rotation au premier bras (28) du levier (26).
